# EUROPÄISCHE PATENTSCHRIFT

(11) **EP 1 512 707 B1**
(45) Veröffentlichungstag und Bekanntmachung des Hinweises auf die Patenterteilung: **30.09.2009**
(21) Anmeldenummer: 04015725.7
(22) Anmeldetag: 03.07.2004
(51) Int. Cl.: C08G 18/18, C08G 18/48, C08J 9/08

(54) **Offenzellige Polyurethan-Hartschaumstoffe**
Open celled rigid polyurethane foams
Mousse de polyuréthane rigide à cellules ouvertes

(30) Priorität: 07.08.2003 DE 10336938
(43) Veröffentlichungstag der Anmeldung: 09.03.2005
(73) Patentinhaber: BASF SE, 67056 Ludwigshafen (DE)
(72) Erfinder: Wiegmann, Werner, 32369 Rahden-Wehe (DE); Biedermann, Anja, Dr., 49356 Diepholz (DE); Krogmann, Jörg, 49393 Lohne (DE)

(56) Entgegenhaltungen:
- DE-A1- 10 009 649
- DE-A1- 10 237 910
- DE-A1- 19 742 010

## Beschreibung

Gegenstand der Erfindung sind offenzellige Polyurethan-Hartschaumstoffe, insbesondere für den Einsatz als Kernmaterial in Vakuum-Isolationspaneelen.

Vakuumisolationseinheiten finden unter anderem Anwendung für Kühlgerätegehäuse, Behälter für Kühlfahrzeuge oder Fernwärmerohre. Aufgrund ihrer geringeren Wärmeleitfähigkeit bieten sie Vorteile gegenüber üblichen Dämmstoffen. So liegt das Energieeinsparpotential gegenüber geschlossenzelligen Polyurethan-Hartschaumstoffen bei etwa 20 bis 30 %.

Solche Vakuumisolationseinheiten bestehen in der Regel aus einem wärmeisolierenden Kernmaterial, beispielsweise offenzelligem Polyurethan (PUR)-Hartschaum, offenzelligem extrudierten Polystyrolschaum, Kieselgelen, Glasfasern, Kunststoffschüttungen, gepresstem Mahlgut aus PUR-Hartschaum bzw. -Halbhartschaum oder Perlite, welches in eine gasdichte Folie verpackt, evakuiert und luftdicht eingeschweißt wird.

Bei einer weiteren Ausführungsform können Vakuumisolationseinheiten durch Einbringen eines Schaumsystems für offenzellige Polyurethan-Hartschaumstoffe in das Innere der Doppelwand eines doppelwandigen Gehäuses, beispielsweise eine Kühlmöbeltür oder ein Kühlmöbelgehäuse, wo das System zu einem offenzelligen Schaum aushärtet, und nachfolgende Evakuierung hergestellt werden. Bei dieser Ausführungsform kann eine Vakuumpumpe mit der mit Schaum gefüllten Doppelwand verbunden werden, durch die das Vakuum bei Bedarf erneuert werden kann.

Bei der Verwendung von Polyurethan-Hartschaumstoffen für derartige Anwendungen ist es wesentlich, dass die Zellen des Schaums offen sind, um eine vollständige Evakuierung des Vakuum-Isolationspaneels zu erreichen.

EP 905159 sowie EP 905158 offenbaren Verfahren zur Herstellung von offenzelligen Hartschaumstoffen, wobei bevorzugt ein Veresterungsprodukt aus Fettsäuren und mehrfunktionellen Alkoholen als Emulgierhilfsmittel zur Unterstützung der lagerstabilen treibmittelhaltigen Emulsion eingesetzt wird. Dabei werden insbesondere Kombinationen von Perfluoralkanen und Alkanen als physikalische Treibmittel eingesetzt. Der Einsatz von Perfluoralkanen zur Erzeugung feiner Zellen ist bereits aus EP 351 614 bekannt.

Generell ist der Einsatz von physikalischen Treibmitteln, die zumeist inerte Gase sind, bei der Herstellung der offenzelligen Polyurethan-Hartschaumstoffe für den Einsatz als Kernmaterial für Vakuum-Paneele nicht erwünscht, da diese vollständig während der Vorbehandlung und Evakuierung der Schaumstoffe entfernt werden müssen. Ansonsten können sie das erforderliche Vakuum beeinträchtigen.

In DE 100 09 649 wird ein Verfahren zur Herstellung von offenzelligen Hartschaumstoffen beschrieben, bei dem auf physikalische Treibmittel verzichtet werden kann. Bei der Herstellung dieser Schäume kommt eine Polyolkomponente zum Einsatz, die neben einem Veresterungsprodukt aus Glycerin und Rizinusöl weitere zur Herstellung von Polyurethan-Hartschaumstoffen übliche Polyetheralkohole mit einer Hydroxylzahl im Bereich von 175 bis 300 mgKOH/g enthält.

Derartige Schäume zeigen im Inneren eine gute Offenzelligkeit und gute mechanische Eigenschaften. Es hat sich allerdings gezeigt, dass diese Systeme eine ungenügende Aushärtung aufweisen. Dies ist insbesondere bei der kontinuierlichen Herstellung der Schaumstoffe, beispielsweise auf Doppelbandanlagen, sehr nachteilig und führt zu Kapazitätseinbußen. Weiterhin kann es zu einer unzureichenden Offenzelligkeit in der Randzone und zur Bildung von Hohlräumen im Schaum, sogenannten Lunkern, und somit zu einem erhöhten Anfall von Ausschussmaterial kommen.

Aufgabe der vorliegenden Erfindung war es daher, offenzellige Polyurethan-Hartschaumstoffe mit einer hohen Offenzelligkeit, insbesondere in der Randzone, und geringer Lunkerbildung bereit zu stellen, die bei ihrer Herstellung gute Aushärteeigenschaften zeigen, auf einem Doppelband kontinuierlich hergestellt und vorteilhaft für die Herstellung von Vakuum-Paneelen verwendet werden können. Überraschenderweise wurde gefunden, dass durch die Verwendung einer Mischung von mindestens drei speziellen Polyolen mit einer Funktionalität der Mischung von mindestens 3,5 die Aufgabe der vorliegenden Erfindung gelöst werden konnte.

Gegenstand der Erfindung ist demzufolge ein Verfahren zur Herstellung von offenzelligen Polyurethan-Hartschaumstoffen durch Umsetzung von
a) Polyisocyanaten mit
b) Verbindungen mit mindestens zwei mit Isocyanatgruppen reaktiven Wasserstoffatomen in Anwesenheit von
c) Katalysatoren,
d) Treibmitteln,
wobei als Verbindungen mit mindestens zwei mit Isocyanatgruppen reaktiven Wasserstoffatomen b) eine Mischung mit einer Funktionalität von mindestens 3,5, enthaltend
bi) mindestens einen Polyetheralkohol mit einer Funktionalität von > 4 und einer Hydroxylzahl von > 450 mgKOH/g, hergestellt durch Umsetzung von H-funktionellen Startsubstanzen mit Alkylenoxiden,
bii) mindestens einen Polyetheralkohol mit einer Funktionalität von 3 bis 4 und einer Hydroxylzahl von > 350 mgKOH/g, hergestellt durch Umsetzung von H-funktionellen Startsubstanzen mit Alkylenoxiden,
biii) mindestens einen Polyetheralkohol mit einer Funktionalität von 3 bis 4 und einer Hydroxylzahl von100 bis 200 mgKOH/g, hergestellt durch Umsetzung von H-funktionellen Startsubstanzen mit Alkylenoxiden;
eingesetzt wird.

Vorzugsweise beträgt der Anteil an Polyol bi) 50 bis 80 Gew.-%, insbesondere 60 bis 70 Gew.-%, der Anteil an Polyol bii) 1 bis 30 Gew.-%, insbesondere 5 bis 15 Gew.-% und der Anteil an Polyol biii) 1 bis 30 Gew.-%, insbesondere 5 bis 20 Gew.-%, jeweils bezogen auf das Gewicht der Komponente b).

Der Polyetheralkohol bi) wird bevorzugt durch Umsetzung von H-funktionellen Startsubstanzen mit einer Funktionalität von mindestens 5, gegebenenfalls im Gemisch mit H-funktionellen Startsubstanzen mit einer Funktionalität von höchstens 3, mit Alkylenoxiden hergestellt. Als Startsubstanzen mit einer Funktionalität von mindestens 5 werden vorzugsweise Zucker, wie Saccharose und/oder Sorbit, eingesetzt. Da die hochfunktionellen Startsubstanzen zumeist hochviskos oder fest sind, erfolgt ihre Umsetzung vorzugsweise in Gegenwart von niederfunktionellen, niedrig viskosen Coinitiatoren, wie Glycerin, Glykolen, wie Ethylenglykol, Diethylenglykol, Propylenglykol oder Dipropylenglykol. Besonders bevorzugt kommen Mischungen aus Saccarose und Glycerin zum Einsatz.

Als Starter für die Herstellung des Polyols bii) kommen bevorzugt Glycerin oder Mischungen aus Sorbit, Saccharose, Toluylendiamin (TDA) oder Pentaerythrit mit Glycerin und/oder Trimethylolpropan (TMP) zum Einsatz. Besonders bevorzugt als Starter ist Glycerin.

Als Starter für die Herstellung des Polyols biii) kommen vorzugsweise TMP und/oder Glycerin oder Mischungen aus Sorbit, Saccharose, TDA und/oder Pentaerythrit mit Glycerin und/oder TMP in Frage. Bevorzugt sind Glycerin und TMP, besonders bevorzugt TMP.

Die Polyetheralkohole bi) bis biii) können durch übliche und bekannte Verfahren hergestellt werden. Die Herstellung erfolgt bevorzugt durch katalytische Anlagerung von Alkylenoxiden, vorzugsweise Ethylenoxid, Propylenoxid Butylenoxid sowie beliebige Mischungen aus mindestens zwei der genannten Alkylenoxide, an die genannten H-funktionellen Startsubstanzen. Vorzugsweise werden als Alkylenoxide Propylenoxid und Mischungen aus Ethylenoxid und Propylenoxid eingesetzt.

Als Katalysatoren werden zumeist basische Katalysatoren, vorzugsweise Kalilauge, eingesetzt. Die Herstellung der Polyole bii) und biii) kann auch unter Verwendung von Multimetallcyanidkatalysatoren, auch als DMC-Katalysatoren bezeichnet, erfolgen. Derartige Katalysatoren sind beispielsweise in EP 862 947 beschrieben.

Die Komponente b) kann neben den Polyolen bi) bis biii) weitere Verbindungen mit mindestens zwei mit Isocyanatgruppen reaktiven Wasserstoffatomen enthalten. Zumeist werden hierbei Polyetheralkohole und/oder Polyesteralkohole eingesetzt.

Die gemeinsam mit den erfindungsgemäß eingesetzten Polyetheralkoholen bi) bis biii) eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Karbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die gemeinsam mit den erfindungsgemäß eingesetzten Polyetheralkoholen bi) bis biii) eingesetzten Polyetheralkohole haben zumeist eine Funktionalität zwischen 2 und 8, insbesondere 4 bis 8.

Insbesondere als Polyhydroxylverbindungen verwendet werden Polyetherpolyole, die nach bekannten Verfahren, beispielsweise durch anionische Polymerisation von Alkylenoxiden in Gegenwart von Alkalihydroxiden, hergestellt werden.

Als Alkylenoxide werden vorzugsweise Ethylenoxid und 1,2-Propylenoxid eingesetzt. Die Alkylenoxide können einzeln, alternierend nacheinander oder als Mischungen verwendet werden.

Als Startermoleküle kommen beispielsweise in Betracht: Wasser, organische Dicarbonsäuren, wie z.B. Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie z.B. gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Anilin, Phenylendiamine, 2,3-, 2,4-, 3,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methylund N-Ethyldiethanolamin und Trialkanolamine wie z.B. Triethanolamin und Ammoniak.

Weiterhin eingesetzt werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Pentaerythrit, Sorbit und Saccharose, mehrwertige Phenole, wie z.B. 4,4'-Dihydroxy-diphenylmethan und 4,4'-Dihydroxydiphenylpropan-2,2, Resole, wie z.B. oligomere Kondensationsprodukte aus Phenol und Formaldehyd und Mannich-Kondensate aus Phenolen, Formaldehyd und Dialkanolaminen sowie Melamin.

Die Polyetherpolyole besitzen zumeist eine Funktionalität von vorzugsweise 3 bis 8 und insbesondere 3 und 6 und Hydroxylzahlen von vorzugsweise 120 mgKOH/g bis 770 mgKOH/g und insbesondere 240 mgKOH/g bis 570 mgKOH/g.

Sofern zur Herstellung der gemeinsam mit den erfindungsgemäß verwendeten Polyetheralkoholen eingesetzten Polyetheralkohole als Startsubstanzen die zur Herstellung der erfindungsgemäß verwendeten Polyetheralkohole eingesetzten Verbindungen verwendet werden, haben die gemeinsam mit den erfindungsgemäß verwendeten Polyetheralkoholen eingesetzten Polyetheralkohole eine Hydroxylzahl außerhalb des Bereiches von 100 bis 250 mgKOH/g.

Zu den Verbindungen mit mindestens zwei mit Isocyanatgruppen reaktiven Wasserstoffatomen gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Sofern zur Herstellung der Hartschaumstoffe auf Isocyanatbasis Kettenverlängerungsmittel, Vernetzungsmittel oder Mischungen davon Anwendung finden, kommen diese zweckmäßigerweise in einer Menge von 0 bis 20 Gew.-%, vorzugsweise 2 bis 5 Gew.-%, bezogen auf das Gewicht der Verbindungen mit mindestens zwei mit Isocyanatgruppen reaktiven Wasserstoffatomen b), zum Einsatz.

Der Anteil der Polyole bi), bii) und biii) an der Komponente b) beträgt bei Mitverwendung weiterer Verbindungen mit mindestens zwei mit Isocyanatgruppen reaktiven Wasserstoffatomen mindestens 55, vorzugsweise mindestens 80 und insbesondere mindestens 90 Gew.-%, bezogen auf die Komponente b).

Das erfindungsgemäße Verfahren wird üblicherweise in Anwesenheit von Treibmitteln, Katalysatoren sowie, falls erforderlich, Hilfs- und/oder Zusatzstoffen durchgeführt.

Als Katalysatoren c) können die üblichen und bekannten Polyurethan-Katalysatoren eingesetzt werden. Insbesondere werden Verbindungen eingesetzt, welche die Reaktion der Isocyanatgruppen mit den mit Isocyanatgruppen reaktiven Gruppen stark beschleunigen. Insbesondere eingesetzt werden organische Metallverbindungen, vorzugsweise organische Zinnverbindungen, wie Zinn(II)-salze von organischen Säuren.

Weiterhin können als Katalysatoren stark basische Amine eingesetzt werden. Beispiele hierfür sind sekundäre aliphatische Amine, Imidazole, Amidine, Triazine sowie Alkanolamine.

Die Katalysatoren können, je nach Erfordernis, allein oder in beliebigen Mischungen untereinander eingesetzt werden.

In einer vorteilhaften Ausführungsform des erfindungsgemäßen Verfahrens wird als Katalysator c) eine Mischung aus Dimethylamino-N-methyl-ethanolamin und einem Gemisch aus N-Dimethyl-3-aminopropyl)-harnstoff und/oder N,N,N'-Trimethyl-N'hydroxyethyl-bis aminoethylether eingesetzt.

Der N,N,N'-Trimethyl-N'-hydroxyethyl-bis aminoethylether wird insbesondere in Lösung eingesetzt. Bevorzugt ist eine Lösung in Dipropylenglykol, wobei eine handelsübliche Lösung 17,3%-ig in Dipropylenglykol angeboten wird.

Die beiden genannten bevorzugten Katalysatoren werden vorzugsweise in einem Gewichtsverhältnis von N-Dimethyl-3-aminopropyl)-harnstoff zur Lösung von N,N,N'-Trimethyl-N'-hydroxyethyl-bis aminoethylether von 1:5; insbesondere von 1:1-1,5, eingesetzt. Bei Einsatz der genannten Katalysatormischung kann in Verbindung mir der erfindungsgemäß verwendeten Polyolmischung eine besonders gute Durchhärtung erreicht werden.

Als Treibmittel kann vorzugsweise Wasser verwendet werden, das mit Isocyanatgruppen unter Abspaltung von Kohlendioxid reagiert. An Stelle von, vorzugsweise jedoch in Kombination mit Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 110°C, insbesondere unter 80°C. Zu den physikalischen Treibmitteln zählen auch inerte Gase, die in den in die Einsatzkomponenten eingebracht bzw. in ihnen gelöst werden, beispielsweise Kohlendioxid, Stickstoff oder Edelgase.

Die bei Raumtemperatur flüssigen Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Die genannten physikalischen Treibmittel können allein oder in beliebigen Kombinationen untereinander eingesetzt werden.

Überraschenderweise ist es bei dem erfindungsgemäßen Verfahren möglich, nur mit Wasser als Treibmittel zu arbeiten, was zu einer Vereinfachung und Verbilligung des Verfahrens führt.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Flammschutzmittel, Hydrölyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane", Carl-Hanser-Verlag München, 1. Auflage, 1966, 2. Auflage, 1983 und 3. Auflage, 1993.

Zur Herstellung der Polyurethan-Hartschaumstoffe werden die Polyisocyanate a), und die Verbindungen mit mindestens zwei mit Isocyanatgruppen reaktiven Wasserstoffatomen b) in solchen Mengen zur Umsetzung gebracht, dass das ÄquivalenzVerhältnis von NCO-Gruppen der Polyisocyanate a) zur Summe der reaktiven Wasserstoffatome der Komponenten b) 0,85 bis 1,75:1, vorzugsweise 1,0 bis 1,3:1 und insbesondere ungefähr 1,0 bis 1,15:1, beträgt. Sofern die Urethangruppen enthaltenden Schaumstoffe durch die Bildung von Isocyanuratgruppen modifiziert werden, beispielsweise zur Erhöhung der Flammwidrigkeit, wird üblicherweise ein Verhältnis von NCO-Gruppen der Polyisocyanate a) zur Summe der reaktiven Wasserstoffatome der Komponente b) von 1,6 bis 60:1, vorzugsweise 3,0 bis 8:1 angewandt.

Die Polyurethan-Hartschaumstoffe können diskontinuierlich oder kontinuierlich nach dem Prepolymer- oder vorzugsweise nach dem one shot-Verfahren mit Hilfe bekannter Mischvorrichtungen hergestellt werden.

Als besonders vorteilhaft hat es sich erwiesen, nach dem Zweikomponenten-Verfahren zu arbeiten und die Verbindungen mit mindestens zwei mit Isocyanatgruppen reaktiven Wasserstoffatomen zusammen mit den Treibmitteln, den Katalysatoren sowie den Hilfs- und/oder Zusatzstoffen zu einer sogenannten Polyolkomponente zu vereinigen und diese mit den Polyisocyanaten oder Mischungen aus den Polyisocyanaten und gegebenenfalls Treibmitteln, auch als Isocyanatkomponente bezeichnet, zur Umsetzung zu bringen.

Die nach dem erfindungsgemäßen Verfahren hergestellten offenzelligen Polyurethan-Hartschaumstoffe werden, wie oben beschrieben, vorzugsweise als Kernmaterial für Vakuum-Isolationspaneele eingesetzt. Eine weitere bevorzugte Anwendung ist der Einsatz als Wärmedämmmaterial in voll evakuierten Kühlschränken.

Prinzipiell sind die erfindungsgemäßen Schaumstoffe weiterhin überall dort einsetzbar, wo offenporige Werkstoffe, die auf Grund ihrer Offenzelligkeit gute schalldämpfende Eigenschaften aufweisen, auch eine hohe Festigkeit besitzen müssen. Weitere Einsatzgebiete der erfindungsgemäßen Schaumstoffe sind somit im Automobilbau zur Schallabsorption, im Bausektor zur Trittschalldämmung, oder auch als Filterhilfsmittel.

Die Vakuumisolationspaneele können in verschiedenen Formen hergestellt werden, beispielsweise als starre Paneele, oder auch mit anderen, nicht planaren Geometrien in flexiblen Kunststofftaschen oder Stahlmantelumhüllungen, beispielsweise bei Fernwärmerohren, und anderen Einsatzgebieten. Ihre Herstellung und die verwendbaren Materialien sind an sich bekannt. Es ist üblich, gemeinsam mit dem Kernmaterial auch ein Gettermaterial mit einzuschweißen, um zu verhindern, dass später ausgasende flüchtige Substanzen das Vakuum beeinträchtigen.

Als Hüllmaterial für die Vakuumisolationspaneele verwendet man im allgemeinen eine Folie. Bevorzugte Folien sind Verbundfolien, insbesondere Mehrschichtverbundfolien mit einer aufgedampften oder auflaminierten Metallschicht, beispielsweise aus Aluminium. Geeignete Folien bestehen z. B. aus Polyester, Polyvinylchlorid, Polyolefinen wie Polyethylen oder Polypropylen, oder Polyvinylalkohol. Als Hüllmaterial kommen beispielsweise auch Inliner von Kühlschränken, Rohrummantelungen oder Metallschichten in Betracht.

Bei der Herstellung von Vakuumisolationspaneelen unter Verwendung der nach dem erfindungsgemäßen Verfahren hergestellten Polyurethan-Hartschaumstoffe wird zunächst in an sich bekannter Weise der Schaum hergestellt. Danach werden die erhaltenen Schaumstoffe, sofern sie nicht bereits als entsprechende Formkörper hergestellt wurden, in die Form gebracht, die sie als Kern des Vakuum-Isolationspaneels haben. Dies geschieht vorzugsweise durch sägen in entsprechende Plattengröße. Die Formkörper werden danach in die gasdichte Umhüllung, vorzugsweise die Verbund-Folie, verpackt, evakuiert und gasdicht verschweißt.

Bei dem erfindungsgemäßen Verfahren kommt es zu einer schnelleren Durchhärtung des Schaums, was insbesondere bei der Doppelbandfahrweise zu einer schnelleren Fahrweise und zu einem geringeren Anfall von Ausschuss führt.

Die Erfindung soll an den nachfolgenden Beispielen näher erläutert werden.

### Beispiele 1 bis 8

Folgende Edukte kamen zum Einsatz:
a) Isocyanat:
   Lupranat^{®} M20 NCO-Gehalt 31,1 Gew.-% (Roh-MDI)
b) Polyole:
   1) mit Ethylendiamin gestarteter Polyether auf Basis Propylenoxid. OH-Zahl=470
   2) mit Saccharose und Glycerin gestarteter Polyether auf Basis Propylenoxid, OH-Zahl=485
   3) mit Trimethylolpropan gestarteter Polyether auf Basis Propylenoxid OH-Zahl=550
   4) Ricinusglycerolester, OH-Zahl=385
   5) mit Glycerin gestarteter Polyether auf Basis Propylenoxid OH-Zahl=400
   6) mit Trimethlolpropan gestarteter Polyether auf Basis Propylenoxid OH-Zahl=160
   7) mit Toluylendiamin gestarteter Polyether auf Basis Propylenoxid OH-Zahl=160
   8) mit Glycerin gestarteter Polyether auf Basis Propylen-/Ethylenoxid OH-Zahl=160
c) Katalysatoren:
   9) Dimethylamino-N-methyl-ethanolamin (Dabco^{®} T)
   10) N,N'-Dimorpholindiethylether (Jeffcat^{®} DMDEE von Huntsmann)
   11) Dimethanolamin; Jeffcat^{®} (DMEA von Huntsmann)
   12) 3-Dimethylaminoisopropyl-diisopropanolamin (Jeffcat^{®} DPA von Huntsmann)
   13) N-Dimethyl-3-aminopropyl)-harnstoff
d) Zusatzmittel:
   14) Tegostab^{®} B8919 von Th. Goldschmidt
   15) Tegostab^{®} B8870 von Th. Goldschmidt
   16) Ortegol^{®} 505 von Th. Goldschmidt
   17) Ortegol^{®} 501 von Th. Goldschmidt

Aus den Polyolen b), den Katalysatoren c), den Zusatzmitteln d) und dem Wasser wurde gemäß den Mengen aus Tabelle 1 und 3 eine Polyolkomponente, auch A-Komponente genannt, hergestellt. Diese wurde bei einem Isocyanatindex von 115 mit dem Polyisocyanat gemischt, in einen offenen Becher gegeben und dort ausschäumen gelassen. Die Messergebnisse finden sich in den Tabellen 2 und 4.

### Beschreibung der Methode zur Bestimmung der Durchhärtung

Der zeitliche Ablauf des Härtungsverhaltens eines PUR- Schaums wurde mit Hilfe einer Stoppuhr festgehalten. Die Kraftwerte, die eine Kugelkalotte (Bolzen) aufwenden muss, um 5 mm tief in den Schaum einzudringen, charakterisieren den Härtungsverlauf.

Die Messzeitpunkte müssen für jedes System festgelegt werden (z.B. 5 /6/7/8 Minuten).

Zur Ermittlung der Kernhärtung wurde nach Beendigung der Volumenexpansion und 30 Sekunden vor dem Messzeitpunkt der Schaumpilz über dem Becherrand abgeschnitten. Die Becherprobe wurde nach dem bekannten Verfahren der Becherprüfung im Labor mittels Laborrührer hergestellt, wobei ein Polyethylen beschichteter Pappbecher mit einem Nettovolumen von 735 ml eingesetzt wurde.

Anschließend wurde der Becher unter die Kugelkalotte gefahren, die sich in einem Abstand von 5 mm über dem Becherrand befand und eine Vorspannung von 2 N eingestellt. Zum jeweils festgelegten Zeitpunkt wurde die Kugelkalotte mit einer Vorschubgeschwindigkeit von 100 mm/Minute 5 mm tief in den Schaumpilz eingefahren. Die hierbei aufgewendete Kraft wurde gemessen und abgelesen. Die Messpunkte des Bolzens befanden sich in einem definierten Abstand zum Mittelpunkt des Bechers (Radius zur Bechermitte = 25 mm). Zur Ermittlung der Kraftaufnahme wurde eine Zwicki 1120, Fa. Zwick, mit Kugelkalotte (Durchmesser 20 mm) benutzt.

Als Ergebnis ergibt sich demnach eine Kraft-Zeit-Aufnahme (Durchhärtungsverlauf) des Schaumes. Auf diese Weise lassen sich unterschiedliche Schäume hinsichtlich ihres Durchhärtungsverhaltens miteinander vergleichen. Dabei ist allerdings zu beachten, dass nur Schäume mit ähnlicher Reaktivität und ähnlichen Dichten vergleichbar sind.
Je höher die Werte zu bestimmten Zeiten sind, desto besser ist die Härtung des Schaums, was zu einem günstigeren Entformverhalten führt und somit die Produktivität auf dem Doppelband erhöht.

**Tabelle 1: Zusammensetzung der verwendeten A-Komp. der Beispiele 1-4 (Gewichtsteile)**

| Edukt | Beispiel 1 | Beispiel 2 | Beispiel 3 | Beispiel 4 |
|---|---|---|---|---|
| 1 | - | - | - | - |
| 2 | 65,5 | 65,7 | 65,7 | 65,1 |
| 3 | - | - | - | - |
| 4 | - | - | - | - |
| 5 | 9,4 | 9,4 | 9,4 | 9,3 |
| 6 | 18,7 | 18,8 | - | - |
| 7 | - | - | - | - |
| 8 | - | - | 18,8 | 18,6 |
| 9 | 0,47 | 0,93 | 0,93 | 1,42 |
| 10 | - | - | - | - |
| 11 | - | 1,9 | 1,9 | - |
| 12 | - | - | - | - |
| 13 | 2,34 | | | 1,86 |
| 14 | - | - | - | - |
| 15 | 0,97 | 0,75 | 0,75 | 0,93 |
| 16 | - | - | - | - |
| 17 | 0,94 | 0,93 | 0,93 | 0,93 |
| Wasser | 1,68 | 1,68 | 1,68 | 1,86 |

**Tabelle 2: Eigenschaften der Schäume**

| Parameter | Beispiel 1 | Beispiel 2 | Beispiel 3 | Beispiel 4 |
|---|---|---|---|---|
| Kraft 5,5 min | 47 N | 50 N | 49 N | 53 N |
| Kraft 6,0 min | 58 N | 62 N | 60 N | 67 N |
| Kraft 6,5 min | 67 N | 73 N | 72 N | 80 N |
| Kraft 7,0 min | 76 N | 80 N | 79 N | 89 N |
| Offenzelligkeit | 92 % | 94 % | 94 % | 96 % |

**Tabelle 3: Zusammensetzung der verwendeten A-Komp. der Vergleichsbeispiele 5-8**

| Edukt | Beispiel 5 (V) | Beispiel 6 (V) | Beispiel 7 (V) | Beispiel 8 (V) |
|---|---|---|---|---|
| 1 | 8,9 | 9,0 | 9,0 | 9,0 |
| 2 | 8,9 | 9,0 | 9,0 | 9,0 |
| 3 | 31,2 | 31,3 | 31,3 | 31,3 |
| 4 | 13,5 | 13,6 | 13,6 | 13,6 |
| 5 | 16 | 16,1 | 16,1 | 16,1 |
| 6 | 8,9 | - | 9,0 | 9,0 |
| 7 | - | 9,0 | - | - |
| - | - | - | - | - |
| 9 | 1,3 | 1,2 | 0,9 | 1,2 |
| 10 | - | - | 2,6 | - |
| 11 | - | 2,4 | - | - |
| 12 | 2,9 | - | - | - |
| 13 | - | - | - | - |
| 14 | 3,2 | - | 3,2 | - |
| 15 | 1,3 | 1,3 | 1,3 | 1,4 |
| 16 | - | 3,2 | - | 3,6 |
| 17 | - | - | - | - |
| Cyclopentan | 3,0 | 3,0 | 3,0 | - |
| Wasser | 0,9 | 0,9 | 1,0 | 1,9 |

**Tabelle 4: Eigenschaften der Schäume**

| Parameter | Beispiel 5 | Beispiel 6 | Beispiel 7 | Beispiel 8 |
|---|---|---|---|---|
| Kraft 5,5 min | 30 N | 33 N | 28 N | 25 N |
| Kraft 6,0 min | 42 N | 45 N | 40 N | 36 N |
| Kraft 6,5 min | 52 N | 54 N | 49 N | 46 N |
| Kraft 7,0 min | 61 N | 64 N | 58 N | 55 N |
| Offenzelligkeit | 96 % | 96 % | 94 % | 95 % |

## Patentansprüche

1. Verfahren zur Herstellung von offenzelligen Polyurethan-Hartschaumstoffen durch Umsetzung von
a) Polyisocyanaten mit
b) Verbindungen mit mindestens zwei mit Isocyanatgruppen reaktiven Wasserstoffatomen in Anwesenheit von
c) Katalysatoren,
d) Treibmitteln,
**dadurch gekennzeichnet, dass** als Verbindungen mit mindestens zwei mit Isocyanatgruppen reaktiven Wasserstoffatomen b) eine Mischung mit einer Funktionalität von mindestens 3,5, enthaltend
bi) mindestens einen Polyetheralkohol mit einer Funktionalität von > 4 und einer Hydroxylzahl von > 450 mgKOH/g, hergestellt durch Umsetzung von H-funktionellen Startsubstanzen mit einer Funktionalität von mindestens 5 und gegebenenfalls H-funktionellen Startsubstanzen mit einer Funktionalität von höchstens 3 mit Alkylenoxiden,
bii) mindestens einen Polyetheralkohol mit Funktionalität von 3 bis 4 und einer Hydroxylzahl von > 350 mgKOH/g, hergestellt durch Umsetzung von H-funktionellen Startsubstanzen mit Alkylenoxiden,
biii) mindestens einen Polyetheralkohol mit einer Funktionalität von 3 bis 4 und einer Hydroxylzahl von100 bis 200 mgKOH/g, hergestellt durch Umsetzung H-funktionellen Startsubstanzen mit Alkylenoxiden;
eingesetzt wird.

2. Verfahren nach Anspruch 1, **dadurch gekennzeichnet, dass** der Anteil an Polyol bi) 50 bis 80 Gew.-%, der Anteil an Polyol bii) 1 bis 30 Gew.-% und der Anteil an Polyol biii) 1 bis 30 Gew.-%, jeweils bezogen auf das Gewicht der Komponente b), beträgt.

3. Verfahren nach Anspruch 1, **dadurch gekennzeichnet, dass** der Anteil an Polyol bi) 60 bis 70 Gew.-%, der Anteil an Polyol bii) 5 bis 15 Gew.-% und der Anteil an Polyol biii) 5 bis 20 Gew.-%, jeweils bezogen auf das Gewicht der Komponente b), beträgt.

4. Verfahren nach Anspruch 1, **dadurch gegenzeichnet, dass** der Polyetheralkohol bi) durch Umsetzung von H-funktionellen Startsubstanzen mit einer Funktionalität von mindestens 5, gegebenenfalls im Gemisch mit H-funktionellen Startsubstanzen mit einer Funktionalität von höchstens 3, mit Alkylenoxiden hergestellt wird.

5. Verfahren nach Anspruch 1, **dadurch gegenzeichnet, dass** der Polyetheralkohol bii) durch Umsetzung von Glycerin und/oder Trimethylolpropan oder Mischungen aus Sorbit, Saccharose, Toluylendiamin oder Pentaerythrit mit Glycerin und/oder Trimethylolpropan mit Alkylenoxiden hergestellt wird.

6. Verfahren nach Anspruch 1, **dadurch gegenzeichnet, dass** der Polyetheralkohol biii) durch Umsetzung von Trimethylolpropan und/oder Glycerin oder Mischungen aus Sorbit, Saccharose, TDA und/oder Pentaerythrit mit Glycerin und/oder Trimethylolpropan mit Alkylenoxiden hergestellt wird.

7. Verfahren nach Anspruch 1, **dadurch gekennzeichnet, dass** als Katalysator c) eine Mischung aus Dimethylamino-N-methyl-ethanolamin und N-Dimethyl-3-aminopropyl)-hamstoff eingesetzt wird.

8. Verfahren nach Anspruch 1, **dadurch gekennzeichnet, dass** als Katalysator c) eine Mischung aus Dimethylamino-N-methyl-ethanolamin und N,N,N'-Trimethyl-N'-hydroxyethyl-bis aminoethylether eingesetzt wird.

9. Verfahren nach Anspruch 1, **dadurch gekennzeichnet, dass** als Treibmittel d) ausschließlich Wasser eingesetzt wird.

10. Offenzellige Polyurethan-Hartschaumstoffe, herstellbar nach einem der Ansprüche 1 bis 9.

11. Verwendung von offenzelligen Polyurethan-Hartschaumstoffen nach Anspruch 10 zur Herstellung von Vakuumisolationselementen.

12. Vakuumisolationselemente, **dadurch gekennzeichnet, dass** sie als Kernmaterial offenzellige Polyurethan-Hartschaumstoffen nach Anspruch 10 enthalten.

## Claims

1. A process for producing open-celled rigid polyurethane foams by reacting
a) polyisocyanates with
b) compounds having at least two hydrogen atoms which are reactive toward isocyanate groups in the presence of
c) catalysts,
d) blowing agents,
wherein the component b) made up of compounds having at least two hydrogen atoms which are reactive toward isocyanate groups is a mixture which has a functionality of at least 3.5 and comprises
bi) at least one polyether alcohol which has a functionality of > 4 and a hydroxyl number of > 450 mg KOH/g and is prepared by reacting H-functional starter substances having a functionality of at least 5 and, if appropriate, H-functional starter substances having a functionality of not more than 3 with alkylene oxides,
bii) at least one polyether alcohol which has a functionality of from 3 to 4 and a hydroxyl number of > 350 mg KOH/g and is prepared by reacting H-functional starter substances with alkylene oxides,
biii) at least one polyether alcohol which has a functionality of from 3 to 4 and a hydroxyl number of from 100 to 200 mg KOH/g and is prepared by reacting H-functional starter substances with alkylene oxides.

2. The process according to claim 1, wherein the proportion of polyol bi) is from 50 to 80% by weight, the proportion of polyol bii) is from 1 to 30% by weight and the proportion of polyol biii) is from 1 to 30% by weight, in each case based on the weight of component b).

3. The process according to claim 1, wherein the proportion of polyol bi) is from 60 to 70% by weight, the proportion of polyol bii) is from 5 to 15% by weight and the proportion of polyol biii) is from 5 to 20% by weight, in each case based on the weight of component b).

4. The process according to claim 1, wherein the polyether alcohol bi) is prepared by reacting H-functional starter substances having a functionality of at least 5, if appropriate in admixture with H-functional starter substances having a functionality of not more than 3, with alkylene oxides.

5. The process according to claim 1, wherein the polyether alcohol bii) is prepared by reacting glycerol and/or trimethylolpropane or mixtures of sorbitol, sucrose, toluenediamine or pentaerythritol with glycerol and/or trimethylolpropane with alkylene oxides.

6. The process according to claim 1, wherein the polyether alcohol biii) is prepared by reacting trimethylolpropane and/or glycerol or mixtures of sorbitol, sucrose, TDA and/or pentaerythritol with glycerol and/or trimethylolpropane with alkylene oxides.

7. The process according to claim 1, wherein the catalyst c) used is a mixture of dimethylamino-N-methylethanolamine and N-dimethyl-3-aminopropylurea.

8. The process according to claim 1, wherein the catalyst c) used is a mixture of dimethylamino-N-methylethanolamine and N,N-dimethylaminoethyl N'-methyl-N'-hydroxyethylaminoethyl ether.

9. The process according to claim 1, wherein the blowing agent d) used is exclusively water.

10. An open-celled rigid polyurethane foam which can be prepared according to any of claims 1 to 9.

11. The use of an open-celled rigid polyurethane foam according to claim 10 for producing vacuum insulation elements.

12. A vacuum insulation element comprising an open-celled rigid polyurethane foam according to claim 10 as core material.

## Revendications

1. Procédé pour la production de mousses de polyuréthanne rigides à cellules ouvertes, par mise en réaction
a) de polyisocyanates avec
b) des composés comportant au moins deux atomes d'hydrogène réactifs avec des groupes isocyanate, en présence
c) de catalyseurs,
d) d'agents porogènes,
**caractérisé en ce qu'**on utilise en tant que composés b) comportant au moins deux atomes d'hydrogène réactifs avec des groupes isocyanate un mélange ayant une fonctionnalité d'au moins 3,5, contenant
bi) au moins un polyéther-alcool ayant une fonctionnalité de > 4 et un indice de groupes hydroxy de > 450 mg de KOH/g, préparé par mise en réaction de substances de départ à fonction H ayant une fonctionnalité d'au moins 5 et éventuellement de substances de départ à fonction H ayant une fonctionnalité de 3 au maximum, avec des oxydes d'alkylène,
bii) au moins un polyéther-alcool ayant une fonctionnalité de 3 à 4 et un indice de groupes hydroxy de > 350 mg de KOH/g, préparé par mise en réaction de substances de départ à fonction H avec des oxydes d'alkylène,
biii) au moins un polyéther-alcool ayant une fonctionnalité de 3 à 4 et un indice de groupes hydroxy de 100 à 200 mg de KOH/g, préparé par mise en réaction de substances de départ à fonction H avec des oxydes d'alkylène.

2. Procédé selon la revendication 1, **caractérisé en ce que** la proportion du polyol bi) va de 50 à 80 % en poids, la proportion du polyol bii) va de 1 à 30 % en poids et la proportion du polyol biii) va de 1 à 30 % en poids, chaque fois par rapport au poids du composant b).

3. Procédé selon la revendication 1, **caractérisé en ce que** la proportion du polyol bi) va de 60 à 70 % en poids, la proportion du polyol bii) va de 5 à 15 % en poids et la proportion du polyol biii) va de 5 à 20 % en poids, chaque fois par rapport au poids du composant b).

4. Procédé selon la revendication 1, **caractérisé en ce que** le polyéther-alcool bi) est préparé par mise en réaction de substances de départ à fonction H ayant une fonctionnalité d'au moins 5, éventuellement en mélange avec des substances de départ à fonction H ayant une fonctionnalité de 3 au maximum, avec des oxydes d'alkylène.

5. Procédé selon la revendication 1, **caractérisé en ce que** le polyéther-alcool bii) est préparé par mise en réaction de glycérol et/ou de triméthylolpropane ou de mélanges de sorbitol, saccharose, toluylènediamine ou pentaérythritol avec du glycérol et/ou du triméthylolpropane, avec des oxydes d'alkylène.

6. Procédé selon la revendication 1, **caractérisé en ce que** le polyéther-alcool biii) est préparé par mise en réaction de triméthylolpropane et/ou de glycérol ou de mélanges de sorbitol, saccharose, TDA et/ou pentaérythritol avec du glycérol et/ou du triméthylolpropane, avec des oxydes d'alkylène.

7. Procédé selon la revendication 1, **caractérisé en ce qu'**on utilise comme catalyseur c) un mélange de diméthylamino-N-méthyl-éthanolamine et de N-diméthyl-3-amznopropyl)-urée.

8. Procédé selon la revendication 1, **caractérisé en ce qu'o**n utilise comme catalyseur c) un mélange de diméthylamino-N-méthyl-éthanolamine et de N,N,N'-triméthyl-N'-hydroxyéthyl-bisaminoéthyléther.

9. Procédé selon la revendication 1, **caractérisé en ce qu'**on utilise comme agent porogène d) exclusivement de l'eau.

10. Mousses rigides de polyuréthanne à cellules ouvertes, pouvant être produites selon l'une quelconque des revendications 1 à 9.

11. Utilisation de mousses rigides de polyuréthanne à cellules ouvertes selon la revendication 10, pour la fabrication d'éléments isolant du vide.

12. Éléments isolant du vide, **caractérisés en ce qu'**ils contiennent en tant que matériau de coeur des mousses rigides de polyuréthanne à cellules ouvertes selon la revendication 10.
